# EUROPÄISCHE PATENTANMELDUNG

(11) **EP 2 127 740 A1**
(43) Veröffentlichungstag der Anmeldung: **02.12.2009**
(21) Anmeldenummer: 07866953.8
(22) Anmeldetag: 17.12.2007
(51) Int. Cl.: B01J 20/06, B01J 20/08, B01J 20/18, B82B 1/00

(54) **SORPTIONSMITTEL ZUR ENTFERNUNG VON SCHWERMETALLIONEN AUS WASSER**

(30) Priorität: 09.01.2007 RU 2007101008
(71) Anmelder: Badulin, Nikolay Aleksandrovich, Moscow 127322 (RU)
(72) Erfinder: LISETVSKIY, Vladimir Nikolaevich, Tomsk, 634034 (RU); LISETSKAYA, Tatyana Aleksandrovna, Tomsk, 634034 (RU); MERKUSHEVA, Lidija Nikolaevna, Tomsk, 634063 (RU)
(74) Vertreter: Jeck, Anton
(86) Internationale Anmeldenummer: PCT/RU2007/000713
(87) Internationale Veröffentlichungsnummer: WO 2008/085085

(57) **Zusammenfassung**

Die Erfindung betrifft ein Sorbens zur Entfernung von Schwermetallionen aus Wasser, bestehend aus zerkleinertem Zeolith und einem Material in Nanophase. Ist nach der Erfindung vorgesehen, dass das Nanomaterial Eisenhydroxid in der Nanophase und Böhmit in der Nanophase einschließt und zwar mit folgendem Komponentenverhältnis in Gew. %: Eisehydroxid in der Nanophase 12 - 18, Böhmit in der Nanophase 5 - 13 und zerkleinerter Zeolith Rest, dann hat das Sorbens eine erhöhte Reinigungswirkung und kann bei einer erweiterten Liste von Schwermetallen eingesetzt werden.

## Beschreibung

Die Erfindung betrifft ein Sorbens zur Entfernung von Schwermetallionen aus Wasser bestehend aus zerkleinertem Zeolith und einem Material in Nanophase.

### Gebiet der Technik

Die Erfindung kann als Sorptionsmittel zur Entfernung von Schwermetallionen aus dem Grundwasser und aus Tagwasseranlagen verwendet werden. Sie kann sowohl in den chemischen als auch in Eisenhüttenwerken angewendet werden, überall wo Ätz- und galvanische Verfahren eingesetzt werden.

### Stand der Technik

Aus dem Patent der RF Nr. 2051112, IPC 6 C02F1/28, veröffentlicht am 27.12.1995 ist ein Sorbens bekannt, welches eine Zeolithschicht darstellt. Die Zeolithschicht wird mit einer Oxalsäurelösung mit einer Konzentration von 0,05 bis 0,1 Mol/l im Beisein von Mineralsäure behandelt, bis ein pH von 1 - 2 erreicht ist. Die schwermetallionenhaltigen Abwässer werden durch die Schicht dieses Sorbens durchgelassen. Es wird der folgende Grad der Wasserreinigung / Ionenentfernung aus dem Wasser erreicht: Cr (III) und Cr (VI) bis 100 %, Cu (II) bis 98,2 %, Fe (II, III) bis 99,2 %, Zn (II) bis 98,1 %.

Jedoch weist dieses Sorbens einen wesentlichen Mangel auf. Das Sorbens ist nicht fähig, Arsenionen aus dem Wasser zu entfernen. Dabei ist Arsen praktisch immer im Grundwasser und im Tagwasser enthalten und stellt das schärfste Gift für alle Lebewesen dar.

Ein anderes technisch und in Bezug auf den erreichbaren Effekt am nächsten liegendes bekanntes Sorbens ist aus dem Patent der US Nr. 6921732, IPC B01J 20/06, veröffentlicht am 26.07.2005 bekannt. Es ermöglicht, Wasser zu reinigen und zwar Arsenionen mit unterschiedlicher Valenz zu entfernen. Dabei ist Zeolith verwendet, welches mit Eisen- und Manganoxiden in der Nanophase bedeckt ist. Dieses Sorbens enthält 0,25 bis 10 % Eisenoxid mit einem Molverhältnis Mn/(Mn+Fe) gleich 0,10. Das Sorbens wird mittels einer Zugabe von Zeolith zur Eisenmanganlösung beigemischt. Die Eisenmanganlösung wird durch die Vermengung von Eisenoxidlösung mit einer manganhaltigen Verbindung erzeugt. Dieses Gemisch wird gefiltert. Aus dem gefilterten Produkt wird mittels Trocknung das Sorbens in Form von Zeolith gewonnen. Dieses Sorbens ist mit Eisen- und Manganhydrooxiden in der Nanophase bedeckt.

Das Prototyp-Sorbens weist folgende Mängel auf:
Es ermöglicht, nur Arsenionen zu entfernen und wird nicht zur Entfernung von Ionen anderer Schwermetalle eingesetzt. Dabei ist die höchste Gewässerverunreinigungskonzentration, bei der ein hoher Reinigungsgrad erreicht wird, verhältnismäßig gering nämlich 1,57 mg/l (ppm). Außerdem werden im Laufe der Entfernung von As(III), welches in der Natur weit verbreitet ist, Manganionen Mn(II) freigesetzt. Die Manganionen Mn(II) wirken dabei auch als Wasserverunreinigungsmittel.

### Offenbarung der Erfindung

Es ist Hauptaufgabe der Erfindung, ein Sorbens zur Entfernung von Schwermetallionen aus Wasser zu entwickeln. Dieses Sorbens sollte über eine erhöhte Reinigungsleistung verfügen, welche durch eine Erweiterung der Liste der abgefangenen Schwermetalle bei hohem Verunreinigungsgrad des zu reinigenden Wassers sichergestellt ist.

Die gestellte Aufgabe ist mit den Merkmalen des Anspruchs 1 gelöst.

Das Sorbens zur Entfernung von Schwermetallionen aus Wasser besteht aus einem zerkleinerten Zeolith und einem Material in der Nanophase. Dieses Material schließt Eisenhydroxid in der Nanophase und Böhmit in der Nanophase mit folgendem Komponentenverhältnis in Gew. % ein:

| | |
|---|---|
| Eisenhydroxid in der Nanophase | 12 - 18 |
| Böhmit in der Nanophase | 5 - 13 |
| zerkleinerter Zeolith | Rest. |

Das vorgeschlagene Sorbens zur Entfernung von Schwermetallion aus Wasser besteht also aus zerkleinertem Zeolith und einem Material in der Nanophase, welches Eisenhydroxid in der Nanophase und Böhmit in der Nanophase enthält. Bei dem angegebenen Komponentenverhältnis weist dieses Sorbens eine erhöhte Wasserreinigungsleistung dank der größeren Anzahl der Schwermetalle auf, welche bis zu einem hohen Reinigungsgrad bei hohem Verunreinigungsgrad des zu reinigenden Wassers abgefangen werden. Das angemeldete Sorbens fängt nicht nur Arsen- (III), Arsen- (V) und Crom- (VI) -Anionen, sondern auch Kationen von Kadmium, Kupfer und Blei auf. Die höchste Konzentration der Verschmutzung des zu reinigenden Wassers beträgt 5 mg/l Das heißt, sie ist um das 3,2-fache höher als die des bekannten Prototyp-Sorbens. Außerdem kommt beim Einsatz des vorgeschlagenen Sorbens keine Freisetzung der Ionen von Mangan zustande, welches einen zusätzlichen Wasserverunreinigungsfaktor darstellt. Es liegt also nur die Absorption der Arsenionen vor.

Die Erfindung wird anhand eines in der Zeichnung dargestellten Ausführungsbeispiels näher erläutert. Es zeigt:

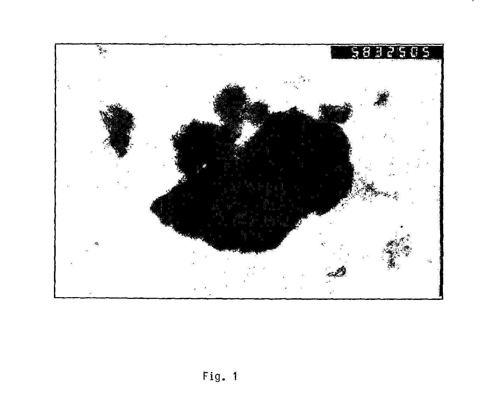

- Fig. 1: die elektronische Aufnahme des angemeldeten Sorbens in Wasser.

### Beispiel 1

Um das angemeldete Sorbens zu erzeugen, wird eine Einwaage von 3 g Zeolith mit folgender chemischer Zusammensetzung in Gew. %, genommen: SiO₂ - 64,79, H₂O - 12,85, Al₂O₃ - 12,75, CaO - 1,89, MgO - 1,50, Fe₂O₃ - 1,40, K₂O - 1,26, Na₂O - 0,44, CaF₂ - 0,03, TiO₂ - 0,02. Dieser Zeolith enthält durchschnittlich 60 % von Klinoptilolith.

Die Zeolith-Einwaage wird mit 0,53 g Böhmit in der Nanophase (dementsprechend 13 %) und 0,62 g von Eisenhydroxid in der Nanophase (dementsprechend 15 %) vermengt. Das resultierende Gemisch wird im Achatmörser im Laufe von 5 Minuten abgerieben, und dann im Laufe von 6 Stunden im Trockenschrank unter einer Temperatur von 190 °C getrocknet.

Böhmit in der Nanophase wird mittels einer Zusammenwirkung zwischen Alupulver und Wasser zu einem schwachbasischen Medium erzeugt. Dafür wird eine Einwaage von 0,238 g Alupulver genommen. Das Alupulver stellt besonders fein zerkleinerte Aluminiumteilchen in Form von Plättchen dar. Die Einwaage von Alupulver wird in 125 ml destilliertes Wasser gesetzt und mit 2 ml konzentrierter Lösung von NH₄OH ergänzt, um ein alkalisches Medium sicherzustellen. Das resultierende Gemisch wird bis zu 50 °C aufgewärmt und stehen gelassen, bis die Reaktion zwischen dem Alupulver und dem Wasser vollständig beendet ist. Danach wird der erhaltene Rückstand im Büchner-Trichter anhand einer der Wasserstrahlpumpe gefiltert und bis zu einem neutralen pH-Wert gespült. Der Rückstand wird 2 Stunden lang in dem Trockenschrank bei 50 - 75 °C, und dann bei 160 °C im Laufe von 6 Stunden getrocknet. Die Röntgenuntersuchung der Phasenzusammensetzung der Probe des erhaltenen Rückstandes wird auf dem Röntgendiffraktometer unter Einsatz einer R-Strahlung von Kupfer mit einer Wellenlänge von 1,54178 Å und eines Nickel-Beta-Filter vorgenommen. Die diffraktometrischen Kennwerte der Probe haben gezeigt, dass die Probe in der Kristallphase ein Böhmit in der Nanophase (Tabelle 1) darstellt. Es sind keine Beimischungen von anderen Kristallphasen festzustellen.

Die gefertigte Probe wurde in einem Elektronenmikroskop im Durchstrahlungsmodus untersucht. Die Untersuchungen haben gezeigt, dass die Probe von Böhmit in der Nanophase aus nadelförmigen 2 bis 5 nm starken und bis zu 200 nm langen Nanoteilchen besteht.

Das Eisenhydroxid in der Nanophase Fe(OH)₃ wird in Form von einem frischgefällten Gels infolge der Zusammenwirkung der Lösungen von Eisenchlorid und NH₄OH gewonnen. Die elektronenmikroskopischen Untersuchungen der Probe haben gezeigt, dass sie aus amorphen Teilchen mit Abmessungen von 50 - 200 nm besteht.

**Tabelle 1**

| Nummer der Diffraktionslinie | Netzebenenabstände gemäß dem Versuch, d_{Versuch}, Å | Referenzwert der Netzebenenabstände, d_{Versuch}, Å (ASTM #21-1307) |
|---|---|---|
| | | für AlOOH (Böhmit) |
| 1 | 6,1 | 6,11 |
| 2 | 3,167 | 3,164 |
| 3 | 2,348 | 2,346 |
| 4 | 1,98 | 1,983 |
| 5 | 1,865 | 1,86 |
| 6 | 1,847 | 1,85 |

### Beispiel 2

Um das angemeldete Sorbens zu fertigen, wird eine Einwaage von 3 g Zeolith mit einer chemischen Zusammensetzung in Gew. %: SiO₂ - 64,79, H₂O - 12,85, Al₂O₃ - 12,75, CaO - 1,89, MgO - 1,50, Fe₂O₃ - 1,40, K₂O - 1,26, Na₂O - 0,44, CaF₂ - 0,03, TiO₂ - 0,02 und einem durchschnittlichen Gehalt von 60 % Klinoptilolith im Laufe von 5 Minuten im Achatmörser zerkleinert, und dann in 125 ml destilliertes Wasser gesetzt. Danach werden 0,238 g Alupulver zugegeben. Der Alupulver stellt besonders feinzerkleinerte Aluminiumteilchen in Form von Plättchen dar. Es werden auch 2 ml konzentrierter Lösung von NH₄OH zugegeben, um ein alkalisches Medium sicherzustellen. Das resultierende Gemisch wird bis zu 50 °C aufgewärmt und stehen gelassen, bis die Reaktion zwischen Alupulver und Wasser vollständig zu Ende ist. Das erhaltene Gemisch wird anhand von Salzsäure bis zu einem Wert von pH = 4 angesäuert. Unter Umrühren werden 53,04 ml von FeCl₃•6H₂O (Konzentration 29,59 g/l) zugegeben. Danach wird das Gemisch unter Umrühren mit 5,1 ml von konzentriertem NH₄OH ergänzt. Nach der Abkühlung wird das erhaltene Gemisch im Büchner-Trichter anhand einer Wasserstrahlpumpe gefiltert und gespült, bis ein neutraler pH-Wert erreicht ist. Der Sorbensrückstand wird im Trockenschrank zuerst im Laufe von 2 Stunden bei einer Temperatur von 50 - 75 °C und dann im Laufe von 6 Stunden bei 190 °C getrocknet. Dabei wird ein Sorbens gewonnen, welcher aus einem zerkleinerten Zeolith und einem Material in der Nanophase besteht. Das Nanomaterial schließt Eisenhydroxid in einer Nanophase, welche 15 % von Eisenhydroxid in der Nanophase entspricht, und Böhmit in der Nanophase, welche 13 % von Böhmit in der Nanophase entspricht, ein.

Das erzeugte Sorbens wird im Elektronenmikroskop untersucht. Auf der elektronischen Aufnahme ist es ersichtlich, dass die 1 bis 8 µm großen Zeolithteilchen mit nadelförmigen Teilchen von Böhmit in der Nanophase und mit amorphen Teilchen von Eisenhydroxid in der Nanophase bedeckt sind.

Somit besteht die gefertigte Probe aus verhältnismäßig großen Zeolithteilchen, welche mit einem Material in der Nanophase bedeckt sind. Dabei enthält diese Probe praktisch keine losen Nanoteilchen. Dies stellt eine geringere Verstopfung der Filterstoffe sowie kleinere Verluste des Wasserdrucks bei nachfolgendem Einsatz des Sorbens sicher.

### Beispiel 3

Um das angemeldete Sorbens zu fertigen, wird eine Einwaage von 3 g Zeolith mit einer chemischen Zusammensetzung in Gew. %: SiO₂ - 64,79, H₂O - 12,85, Al₂O₃-12,75, CaO - 1,89, MgO - 1,50, Fe₂O₃ - 1,40, K₂O - 1,26, Na₂O - 0,44, CaF₂ - 0,03, TiO₂ - 0,02 und einen durchschnittlichen Gehalt von 60 % Klinoptilolith im Laufe von 5 Minuten im Achatmörser zerkleinert, und dann in 125 ml destilliertes Wasser gesetzt. Danach werden 0,081 g Alupulver zugegeben. Der Alupulver stellt besonders feinzerkleinerte Aluminiumteilchen in Form von Plättchen dar. Es werden auch 2 ml konzentrierter Lösung von NH₄OH zugegeben, um ein alkalisches Medium zu bilden. Das resultierende Gemisch wird bis auf 50 °C aufgewärmt und stehen gelassen, bis die Reaktion zwischen dem Alupulver und dem Wasser vollständig beendet ist. Das erhaltene Gemisch wird anhand von Salzsäure bis zu einem Wert von pH = 4 angesäuert. Unter Umrühren werden 36,76 ml einer FeCl₃•6H₂O Lösung (Konzentration 29,59 g/l) zugegeben. Danach wird das Gemisch unter Umrühren mit 3,5 ml von konzentriertem NH₄OH ergänzt. Nach der Abkühlung wird das erhaltene Gemisch im Büchner-Trichter anhand der Wasserstrahlpumpe gefiltert und gespült, bis ein neutraler pH-Wert erreicht ist. Der Sorbensrückstand wird im Trockenschrank zuerst im Laufe von 2 Stunden bei einer Temperatur von 50 - 75 °C und dann im Laufe von 6 Stunden bei 190 °C getrocknet. Dabei wird ein Sorbens gewonnen, welcher aus zerkleinerten Zeolith und einem Material in der Nanophase besteht. Das Nanomaterial schließt Eisenhydroxid in einer Nanophase, welches 12 % von Eisenhydroxid in der Nanophase entspricht, und Böhmit in der Nanophase, welcher 5 % von Böhmit in der Nanophase entspricht, ein.

Das Adsorptionsvermögen der gewonnenen Sorbensproben wurde in Bezug auf Schwermetallionen folgenderweise untersucht:

Die Untersuchung der As(III)-lonenadsorption wird aus einer Modelllösung mit einer Konzentration von 2,5 mg/l durchgeführt. Die 200 mg Einwaage des Sorbens wird in 20 ml der Modelllösung (pH = 6) gesetzt und im Magnetrührer im Laufe von 30 Minuten vermengt. Danach wird die Lösung innerhalb von 10 bis 15 Minuten abgehellt. Dann wird die Lösung nach dem Verfahren der Inversionsvoltamperometrie analysiert, um den Restgehalt an AsO₃³⁻-lonen festzustellen. Dafür wird der aliquote Teil der Lösung (0,2 - 0,5 ml) in die Kammer mit einem reinheitsgeprüften Grundelektrolyt gesetzt. Als Arbeitselektrode wird eine Goldfilmelektrode auf dem Graphitbeschichtungsträger, Hintergrund - 0,3 M, Salzsäure, eingesetzt. Eine Sauerstoffentfernung ist nicht erforderlich, da die höchste anodische Arsenoxidation früher zustande kommt, als eine Sauerstoffreduktionsspannung beobachtet wird. Das Arsen wird auf der Elektrode in Form von einem goldhaltigen Intermetallid im Laufe von 60 Sekunden bei E = -1,0 V gespeichert. Die Voltammogramme (Voltamperkennlinien) werden im Gleichstrommodus auf dem mit dem PC kombinierten Analysegerät abgelesen. Das Analysegerät weist drei elektrochemische Zellen zum Paralleltesten und eine Quarzquecksilberdampf-Lampe zur eventuell erforderlichen UV-Bestrahlung auf. Die Analyse von drei aliquoten Teilen einer Modelllösung wird gleichzeitig vorgenommen. Der Ionenrestgehalt ist ein Mittelwert von drei parallel durchgeführten Versuchen. Die Konzentration wird ausgewertet, indem eine Bezugslösung von AsO₃³⁻ mit einer Konzentration von 2,5 mg/l (in der Menge von je 0,1 ml) zugegeben werden. Die feststellbare Mindestkonzentration beträgt dabei 0,001 mg/l. Der Sorptionsanteil wurde aufgrund der Annahme berechnet, dass eine Anfangskonzentration von AsO₃³⁻ mit 100 % angenommen wird. Die Angaben über die Sorptionsfähigkeit des angemeldeten Sorbens mit einem unterschiedlichen Gehalt an Böhmit in der Nanophase und einem Eisenhydroxid in der Nanophase sind der Tabelle 2 zu entnehmen.

**Tabelle 2**

| Probe | Menge von Fe(OH)₃, % | Menge von Böhmit in der Nanophase, % | Sorptionsanteil, % |
|---|---|---|---|
| 1 | 15 | 0 | 67,9 ± 1,0 |
| 2 | 15 | 5 | 100 |
| 3 | 15 | 10 | 100 |
| 4 | 15 | 13 | 100 |
| 5 | 15 | 15 | 99,8 ± 0,1 |
| 6 | 0 | 13 | 8,0 ± 1,0 |
| 7 | 5 | 13 | 92,8 ± 0,4 |
| 8 | 10 | 13 | 97,6 ± 0,1 |
| 9 | 12 | 13 | 100 |
| 4 | 15 | 13 | 100 |
| 10 | 18 | 13 | 100 |
| 11 | 20 | 13 | 99,8 ± 0,1 |

Aus der Tabelle 2 ist es ersichtlich, dass die besten Sorptionseigenschaften in Bezug auf AsO₃³⁻ dem Sorbens gehören, welches Böhmit in der Nanophase und Eisenhydroxid in der Nanophase mit folgendem Komponentenverhältnis in Gew. % enthält: Eisenhydroxid in der Nanophase - 12 - 18, Böhmit in der Nanophase - 5 - 13, Zeolith - Rest. Bei einem Gehalt von Eisenhydroxid in der Nanophase von über 18 und unter 12 % und von Böhmit in der Nanophase von über 13 und unter 5 % im Sorbens wird eine Abnahme der Adsorptionseigenschaften beobachtet.

Ähnliche Ergebnisse wurden auch beim Einsatz von Zeolith erhalten. Der Gehalt an Klinoptilolith betrug dabei 60 - 70 % und an Montmorillonit 15 - 20 %.

Eine Probe Nr. 2 (Tabelle 2) enthielt 5 % Böhmit in der Nanophase und 15 % Eisenhydroxid in der Nanophase. Die Versuche dieser Probe wurden nach dem gleichen Verfahren jedoch bei einer höheren Ionenkonzentration von AsO₃³⁻ - 5 mg/l vorgenommen. Diese Konzentration war um das zehnfache höher als der Grenzwert. Nach der Sorption wurden keine AsO₃³⁻ mehr festgestellt.

In ähnlicher Weise wurden Versuche von Sorbensproben in Bezug auf eine lonenadsorption von anderen Schwermetallen durchgeführt, und zwar bei solchen Konzentrationen, welche den Grenzwert fünffach überschritten: Cd²⁺ - 0,1 mg/l, Cu²⁺ - 2,5 mg/l, Pb²⁺ - 0,3 mg/l, AsO₄³⁻ - 2,5 mg/l, CrO₄²⁻ - 1,0 mg/l. Die Kationen wurden auf einer Quecksilberfilmelektrode mit einer Silberunterlage erkannt, die Chromatanionen auf einer Arbeits-Graphitelektrode und die Arsenanionen (V) auf einer Gold-Graphitelektrode. Die Angaben zum Nachweis eines hohen Sorptionsvermögens des vorgeschlagenen Sorbens in Bezug auf Ionen von unterschiedlichen Schwermetallen sind in Tabelle 3 angegeben.

**Tabelle 3**

| Probe | Cd²⁺ | Pb²⁺ | Cu²⁺ | CrO₄²⁻ | AsO₄³⁻ |
|---|---|---|---|---|---|
| Nr. 3 | 99,0 ± 0,5 | 96,0 ± 0,7 | 98,6 ± 0,2 | 100 | 99,0 ± 1,0 |
| Nr. 3 nach Adsorption im Laufe von 24 Stunden | 100 | 98,0 ± 1,0 | 100 | 100 | 100 |

### Gewerbliche Anwendbarkeit

Das angemeldete Sorbens zur Entfernung von Schwermetallionen aus Wasser hat eine erhöhte Reinigungsleistung gezeigt. Das wird durch eine Erweiterung der Anzahl von Schwermetallen sichergestellt, welche mit einem hohen Reinigungsgrad bei hohem Verunreinigungsgrad des zu reinigenden Wassers abgefangen werden. Das angemeldete Sorbens kann zur Entfernung von Schwermetallionen aus dem Grundwasser und aus Tagwasseranlagen eingesetzt werden. Es kann auch in Chemiebetrieben und Eisenhüttenwerken angewendet werden, welche ätzende und galvanische Verfahren einsetzen.

## Patentansprüche

1. Sorbens zur Entfernung von Schwermetallionen aus Wasser, bestehend aus zerkleinertem Zeolith und einem Material in Nanophase,
**dadurch gekennzeichnet,**
**dass** das Nanomaterial Eisenhydroxid in der Nanophase und Böhmit in der Nanophase einschließt, und zwar mit folgendem Komponentenverhältnis in Gew. %:
| | |
|---|---|
| Eisenhydroxid in der Nanophase | 12 - 18 |
| Böhmit in der Nanophase | 5 - 13 |
| zerkleinerter Zeolith | Rest. |
